# EUROPEAN PATENT SPECIFICATION

(11) **EP 3 556 996 B1**
(45) Date of publication and mention of the grant of the patent: **02.06.2021**
(21) Application number: 19168217.8
(22) Date of filing: 09.04.2019
(51) Int. Cl.: F01D 5/08, F01D 5/18, F01D 25/12

(54) **BLADE WITH INLET ORIFICE ON FORWARD FACE OF ROOT**
SCHAUFEL MIT EINLASSÖFFNUNG AUF DER VORDEREN STIRNSEITE DES FUSSES
AUBE AVEC ORIFICE D'ENTRÉE SUR LA FACE AVANT D'UNE RACINE

(30) Priority: 20.04.2018 US 201815958080
(43) Date of publication of application: 23.10.2019
(73) Proprietor: Raytheon Technologies Corporation, Farmington, CT 06032 (US)
(72) Inventor: JENNINGS, Timothy J., US / New Britain , CT 06051 (US); PROPHETER-HINCKLEY, Tracy A., Rocky Hill, CT Connecticut 06067 (US)
(74) Representative: Dehns

(56) References cited:
- EP-A2- 0 043 300
- EP-A2- 1 087 102
- US-A1- 2014 369 852

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

EP 1 087 102 A2 discloses a prior art gas turbine bucket with impingement cooled platform.

EP 0 043 300 A2 discloses a prior art cooling system for turbine blades and discs.

### SUMMARY

In accordance with a first aspect of the present invention, there is provided a gas turbine engine blade as claimed in claim 1.

In a further embodiment of the foregoing embodiment, the inlet orifice is flush with the forward axial face.

In a further embodiment of any of the foregoing embodiments, the outlet orifice is circumferentially centered on the forward axial face.

In a further embodiment of any of the foregoing embodiments, the airfoil defines a suction side and a pressure side, and the platform has a first circumferential side on the suction side and a second circumferential side on the pressure side, and in the platform the cooling passage is closer to the first side than to the second side.

In a further embodiment of any of the foregoing embodiments, the root has a radial span defined as a distance from a radially inner face of the root to a leading edge of the platform, with 0% span at the radially inner face of the root and 100% span at the leading edge of the platform, and the inlet orifice is located at 50% span or greater.

In a further embodiment of any of the foregoing embodiments, the inlet orifice is located at 60% span to 90% span.

In a further embodiment of any of the foregoing embodiments, the cooling passage extends to one or more outlet orifices in the platform.

In a further embodiment of any of the foregoing embodiments, the outlet orifices open on the gaspath side of the platform, aft of the trailing end of the airfoil.

In a further embodiment of any of the foregoing embodiments, the cooling passage includes a serpentine section within the platform.

In a further embodiment of any of the foregoing embodiments, the serpentine section turns at least 180°.

In accordance with a second aspect of the present invention, there is provided a gas turbine engine as claimed in claim 11.

In a further embodiment of the foregoing embodiment, the inlet orifice is flush with the forward axial face.

In a further embodiment of any of the foregoing embodiments, the outlet orifice is circumferentially centered on the forward axial face.

In a further embodiment of any of the foregoing embodiments, the airfoil defines a suction side and a pressure side, and the platform has a first circumferential side on the suction side and a second circumferential side on the pressure side, and in the platform the cooling passage is closer to the first side than to the second side.

In a further embodiment of any of the foregoing embodiments, the root has a radial span defined as a distance from a radially inner face of the root to a leading edge of the platform, with 0% span at the radially inner face of the root and 100% span at the leading edge of the platform, and the inlet orifice is located at 50% span or greater.

In accordance with a third aspect of the present invention, there is provided a method for cooling a gas turbine engine blade as claimed in claim 12.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates an isolated view of a blade of the gas turbine engine.
Figure 3 illustrates a sectioned view through a root of the blade of Figure 2.
Figure 4 illustrates another sectioned view through the root and platform of the blade of Figure 2.
Figure 5 illustrates a sectioned view through the platform of the blade of Figure 2.
Figure 6 illustrates another sectioned view through the airfoil of the blade of Figure 2.

### DETAILED DESCRIPTION

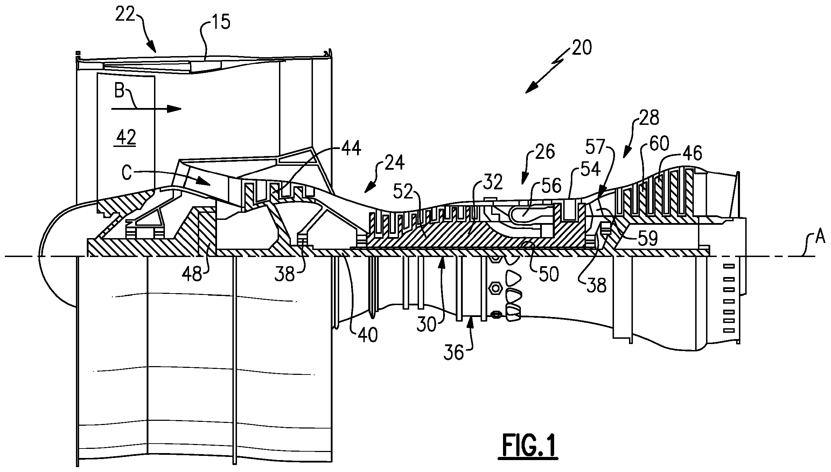

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, the examples herein are not limited to use with two-spool turbofans and may be applied to other types of turbomachinery, including direct drive engine architectures, three-spool engine architectures, and ground-based turbines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48, to drive the fan 42 at a lower speed than the low speed spool 30.

The high speed spool 32 includes an outer shaft 50 that interconnects a second (or high) pressure compressor 52 and a second (or high) pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports the bearing systems 38 in the turbine section 28. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines, including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (about 10.670 m). The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0,5}. The "Low corrected fan tip speed" as disclosed herein according to one non-limiting embodiment is less than about 350,5 m/s (about 1150 ft/s).

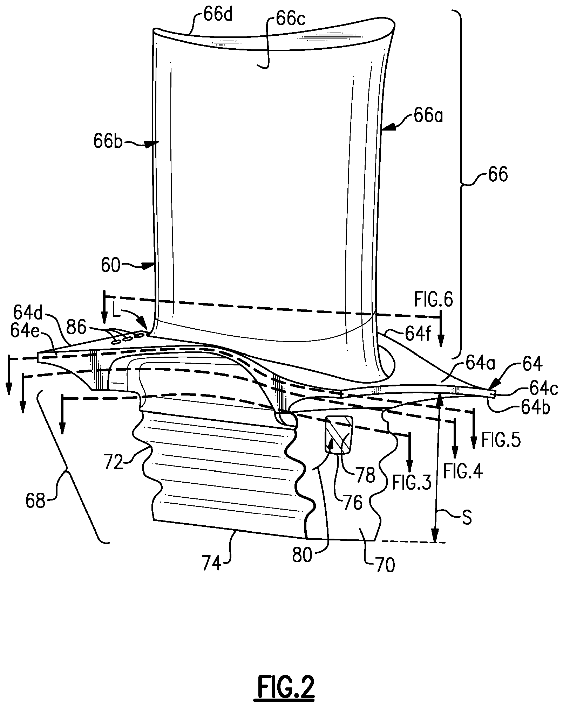

Figure 2 illustrates an example blade 60 that may be used in the turbine section 28 of the engine 20. The blade 60 includes a platform 64, an airfoil 66, and a root 68. The platform 64 defines a gaspath side 64a, a non-gaspath side 64b, a forward end 64c, an aft end 64d, and first and second circumferential sides 64e/64f. The gaspath side 64a bounds a portion of the core flowpath C of the engine 20. The airfoil 66 extends radially from the gaspath side 64a. The airfoil 66 defines a leading end 66a, a trailing end 66b, a suction side 66c, and a pressure side 66d. The first circumferential side 64e is on the suction side 66c, and the second circumferential side 64f is on the pressure side 66d. As used herein, terms such as "leading," "trailing," "forward," and "aft" are made with reference to the flow of gas and combustion products through the engine 20.

The root 68 is generally configured to secure the blade 60, such as to a hub in a turbine section 28. In this regard, the root 68 may include a fir-tree geometry that interlocks in a known manner with a corresponding axial slot in the hub. The root 68 extends radially from the non-gaspath side 64b of the platform 64. The root 68 defines a forward axial face 70, an aft axial face 72, and a radially inner face 74.

For cooling, the blade 60 includes an inlet orifice 76 at the forward axial face 70. The inlet orifice 76 leads into a cooling passage 78 within the root 68. The radial position of the inlet orifice 76 along the forward axial face 70 may be varied. In one example, the root 68 defines a radial span, represented at S in Figure 2. The radial span S is the linear radial distance between the radially inner face 74 of the root 68 and the inner edge of the forward end of the platform 64. The radial span S can be expressed as a percentage of that distance, with 0% span being at the radially inner face 74 and 100% span being at the inner edge of the forward end of the platform 64. In the example shown, the inlet orifice 76 is located at a span of 50% or greater (i.e., the radially outboard portion of the root 68). In a further example, the inlet orifice 76 is located at a span of 60% to 90%. The location of the inlet orifice 76 in the radially outboard portion of the root 68 facilitates stress reduction. In the outboard portion, as compared to the inboard portion, there is less mass radially outwards for centrifugal pull. The location of the inlet orifice 76 in the radially outboard portion of the root also means that the cooling passage 78 need not extend in the radially inboard portion of the root 68, which may otherwise require a larger and more complex casting core.

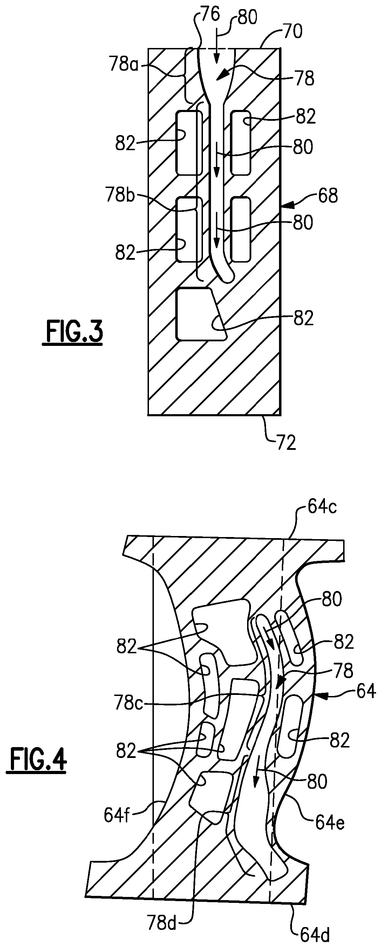

Figures 3, 4, 5, and 6 depict various cross sections through the blade 60 at the section lines shown in Figure 2. Referring to Figure 3, the inlet orifice 76 is flush with the forward axial face 70 in this example, and is circumferentially centered on the forward axial face 70. In modified examples, the inlet orifice 76 may not be flush, although the flush orifice may be easier to manufacture. Likewise, in modified examples the inlet orifice 76 may not be centered, however the centering may provide a balancing of stress and thermal distributions.

The inlet orifice 76 opens into the cooling passage 78, which extends axially and radially through the root 68. Although not limited in geometry, the cooling passage 78 in this example has a flared inlet portion 78a. The flared inlet portion 78a converges from the inlet orifice 76 to an axial location aft of the forward axial face 70. The flared inlet portion 78a provides an enlarged cross-section compared to an adjacent first leg 78b of the cooling passage 78. This enlargement facilitates the prevention of clogging of foreign debris that may be entrained in cooling air 80 entering the cooling passage 78, as well as reducing pressure loss.

As also shown in Figure 3, the root 68 additionally includes airfoil cooling passages 82. The airfoil cooling passages 82 are fed cooling air from other inlets that are not shown here, such as inlets in pockets of the blade 60 under the first and second circumferential sides 64e/64f of the platform 64. The airfoil cooling passages 82 are isolated within the blade 60 from the cooling passage 78. The airfoil cooling passages 82 generally extend through the platform 64 and into the airfoil 66 to provide cooling therein. In the illustrated cross-section, there are five airfoil cooling passages 82, which may branch into further sub-passages seen in subsequent figures. Two of the airfoil cooling passages 82 are laterally disposed to one side of the cooling passage 78, and three of the airfoil cooling passages 82 are laterally disposed to the other side of the cooling passage 78. The cooling passage 78 thus passes between these two sets of the airfoil cooling passages 82. As can be appreciated, modified examples may include fewer airfoil cooling passages 82 or additional airfoil cooling passages 82 on either side of the cooling passage 78.

Figure 4 illustrates a sectioned view through an initial portion of the platform 64. The first leg 78b of the cooling passage 78 transitions and narrows into a second leg 78c of the cooling passage 78. That is, the second leg 78c in this example is narrower in the circumferential direction at its narrowest point than the first leg 78b is at its narrowest point. The second leg 78c then widens or flares into a third leg 78d. Such a geometry helps the cooling passage 78 pass between the two sets of the airfoil cooling passages 82, which at least at the position of the illustrated cross-section are tightly packed. That is, the cooling passage 78 narrows down in order to pass between the airfoil cooling passages 82, and then widens once it is clear of the airfoil cooling passages 82. This, in turn, enables the cooling air 80 to enter from the front of the blade 60 but exit into the core gaspath at the rear of the blade 60, without substantially interfering with the airfoil cooling passages 82. Also of note in the illustrated cross-section, the cooling passage 78 in this example is closer to the first circumferential side 64e than to the second circumferential side 64f in order to cool the aft suction side of the platform 64. In a modified example, the cooling passage may be closer to the second circumferential side 64f to cool the aft pressure side of the platform 64.

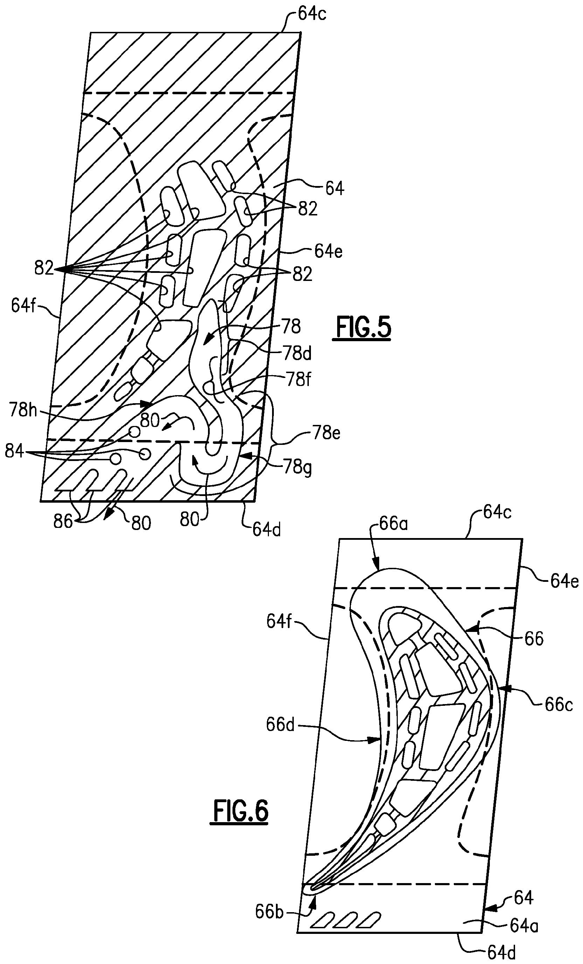

As shown in Figure 5, the third leg 78d then feeds into a serpentine section 78e that is within the platform 64. In this example, the serpentine section 78e includes a portion 78f that has a slight bend which transitions into another portion 78g that turns approximately 180° or more before transitioning into portion 78h that turns in an aft direction toward the trailing end 64d of the platform 64. The serpentine section 78e is located in an axially trailing 50% of the platform 64. In this example, there are one or more pedestals 84 disposed in the cooling passage 78 to enhance mixing and thermal transfer. Alternatively or in addition to the pedestals 84, the cooling passage 78 may include depressions, bumps or projections, trip strips, film slots, mateface holes, or the like for enhancing thermal transfer. Finally, the cooling passage 78 terminates at one or more outlet orifices 86 in the platform 64.

Referring to Figure 6, the airfoil cooling passages 82 continue to extend radially outward into the airfoil 66 of the blade 60. The cooling passage 78, however, extends exclusively in the root 68 and platform 64 of the blade 60. Moreover, the serpentine section 78e of the cooling passage 78 permits the cooling passage 78 to wind laterally (circumferentially) back and forth within the platform 64 to provide a greater cooling effect across the circumferential width of the platform 64. It is to be understood that the configuration of the serpentine section 78e may be varied from the configuration shown. For example, the serpentine section 78e may split into two or more sub-passages and/or contain ribs or other features for guiding flow and/or features for enhancing heat transfer.

Referring again to Figure 2, in the engine 20, cooling air 80 is provided to the forward region of the blade 60. In this regard, a method of cooling the blade 60 includes feeding the cooling air 80 to the forward axial face 70, through the inlet orifice 76, and into the cooling passage 78.

For example, the cooling air 80 may be bleed air from the compressor section 24 of the engine 20. In one example, the cooling air 80 is provided from a region forward of the blade 60 such that it enters the region of the blade 60 at or near the forward axial face 70. In this case, the cooling air 80 travels into the inlet orifice 76 and subsequently into the cooling passage 78. The cooling air 80 then travels through the cooling passage 78 to thereby cool a portion of the root 68 and the platform 64 of the blade 60. Finally, the cooling air 80 is ejected from the platform 64 through the outlet orifices 86 and into the core gaspath.

As an example, the outlet orifices 86 can be located in any of a variety of different positions on the platform 64. For instance, the outlet orifices 86 may be on the axial face of the platform 64, on the gaspath side 64a of the platform 64, on the non-gaspath side of the platform 64, on the circumferential sides of the platform 64, or combinations of the axial face, the gaspath side 64a, the non-gaspath side 64, and the circumferential sides. In some examples, such as illustrated in Figure 2, the outlet orifices 86 are located such that they open on the gaspath side 64a of the platform 64 at a location L aft of the airfoil 66. In that region, there is generally a lower pressure, which facilitates flow of the cooling air 80 for film cooling of the aft portion of the platform 64.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A gas turbine engine blade (60) comprising:
a platform (64) having a gaspath side (64a) and a non-gaspath side (64b);
an airfoil (66) extending radially from the gaspath side (64a) of the platform (64), the airfoil (66) defining a leading end (66a) and a trailing end (66b);
a root (68) configured to secure the blade (60), the root (68) extending radially from the non-gaspath side (64b) of the platform (64), the root (68) defining forward and aft axial faces (70, 72), and an inlet orifice (76) in the forward axial face (70); and
a cooling passage (78) extending from the inlet orifice (76), through the root (68), and into the platform (64);
**characterised by**
further comprising a plurality of airfoil cooling passages (82) that radially extend through the root (68) and platform (64) and into the airfoil (66), the cooling passage (78) passing circumferentially between at least two of the airfoil cooling passages (82);
wherein the cooling passage (78) extends exclusively in the platform (64) and the root (68), and the airfoil cooling passages (82) are isolated within the blade (60) from the cooling passage (78).

2. The gas turbine engine blade as recited in claim 1, wherein the inlet orifice (76) is flush with the forward axial face (70).

3. The gas turbine engine blade as recited in claim 1 or 2, wherein the inlet orifice (76) is circumferentially centered on the forward axial face (70).

4. The gas turbine engine blade as recited in any preceding claim, wherein the airfoil (66) defines a suction side (66c) and a pressure side (66d), and the platform (64) has a first circumferential side (64e) on the suction side (66c) and a second circumferential side (64f) on the pressure side (66d), and in the platform (64) the cooling passage (78) is closer to the first side (64e) than to the second side (64f).

5. The gas turbine engine blade as recited in any preceding claim, wherein the root (68) has a radial span (S) defined as a distance from a radially inner face (74) of the root (68) to a leading edge of the platform (64), with 0% span at the radially inner face (74) of the root (68) and 100% span at the leading edge of the platform (64), and the inlet orifice (76) is located at 50% span or greater.

6. The gas turbine engine blade as recited in claim 5, wherein the inlet orifice (76) is located at 60% span to 90% span.

7. The gas turbine engine blade as recited in any preceding claim, wherein the cooling passage (78) extends to one or more outlet orifices (86) in the platform (64).

8. The gas turbine engine blade as recited in claim 7, wherein the outlet orifices (86) open on the gaspath side (64a) of the platform (64), aft of the trailing end (66b) of the airfoil (66).

9. The gas turbine engine blade as recited in any preceding claim, wherein the cooling passage (78) includes a serpentine section (78e) within the platform (64).

10. The gas turbine engine blade as recited in claim 9, wherein the serpentine section (78e) turns at least 180°.

11. A gas turbine engine (20) comprising:
a compressor section (24);
a combustor (56) in fluid communication with the compressor section (24); and
a turbine section (28) in fluid communication with the combustor (56), the turbine section (28) being coupled to drive the compressor section (24), the turbine section (28) having a gas turbine engine blade (60) as recited in any preceding claim.

12. A method for cooling a gas turbine engine blade, the method comprising:
cooling a blade (60) that includes
a platform (64) having a gaspath side (64a) and a non-gaspath side (64b);
an airfoil (66) extending radially from the gaspath side (64a) of the platform (64), the airfoil (66) defining a leading end (66a) and a trailing end (66b);
a root (68) configured to secure the blade (60), the root (68) extending radially from the non-gaspath side (64b) of the platform (64), the root (68) defining forward and aft axial faces (70, 72), and an inlet orifice (76) in the forward axial face (70); and
a cooling passage (78) extending from the inlet orifice (76), through the root (68), and into the platform (64), and
a cooling passage (78) extending in the root (68) from the inlet orifice (76),
wherein the cooling of the blade (60) includes feeding cooling air (80) to the forward axial face (70), through the inlet orifice (76), and into the cooling passage (78);
**characterised by** the blade further comprising:
a plurality of airfoil cooling passages (82) that radially extend through the root (68) and platform (64) and into the airfoil (66), and the cooling passage (78) passing circumferentially between at least two of the airfoil cooling passages (82), wherein the cooling passage (78) extends exclusively in the platform (64) and the root (68), and the airfoil cooling passages (82) are isolated within the blade (60) from the cooling passage (78).

## Patentansprüche

1. Schaufel für ein Gasturbinentriebwerk (60), umfassend:
eine Plattform (64), die eine Gaswegseite (64a) und eine Nicht-Gaswegseite (64b) aufweist;
ein Schaufelprofil (66), das sich radial von der Gaswegseite (64a) der Plattform (64) erstreckt, wobei das Schaufelprofil (66) eine Vorderkante (66a) und eine Hinterkante (66b) definiert;
einen Fuß (68), der dazu konfiguriert ist, die Schaufel (60) zu sichern, wobei sich der Fuß (68) radial von der Nicht-Gaswegseite (64b) der Plattform (64) erstreckt, der Fuß (68) vordere und hintere axiale Stirnseiten (70, 72) und eine Einlassöffnung (76) in der vorderen axialen Stirnseite (70) definiert; und
einen Kühldurchgang (78), der sich von der Einlassöffnung (76) durch den Fuß (68) und in die Plattform (64) erstreckt;
**gekennzeichnet durch**
ferner umfassend eine Vielzahl von Schaufelprofilkühldurchgängen (82), die sich radial durch den Fuß (68) und die Plattform (64) und in das Schaufelprofil (66) erstrecken, wobei der Kühldurchgang (78) in Umfangsrichtung zwischen mindestsens zwei der Schaufelprofilkühldurchgänge (82) verläuft;
wobei sich der Kühldurchgang (78) ausschließlich in der Plattform (64) und dem Fuß (68) erstreckt und die Schaufelprofilkühldurchgänge (82) innerhalb der Schaufel (60) von dem Kühldurchgang (78) isoliert sind.

2. Schaufel für ein Gasturbinentriebwerk nach Anspruch 1, wobei die Einlassöffnung (76) bündig mit der vorderen axialen Stirnseite (70) ist.

3. Schaufel für ein Gasturbinentriebwerk nach Anspruch 1 oder 2, wobei die Einlassöffnung (76) in Umfangsrichtung auf der vorderen axialen Stirnseite (70) zentriert ist.

4. Schaufel für ein Gasturbinentriebwerk nach einem der vorangehenden Ansprüche, wobei das Schaufelprofil (66) eine Saugseite (66c) und eine Druckseite (66d) definiert und die Plattform (64) eine erste Umfangsseite (64e) auf der Saugseite (66c) und eine zweite Umfangsseite (64f) auf der Druckseite (66d) aufweist und der Kühldurchgang (78) in der Plattform (64) näher an der ersten Seite (64e) als an der zweiten Seite (64f) ist.

5. Schaufel für ein Gasturbinentriebwerk nach einem der vorangehenden Ansprüche, wobei der Fuß (68) einen radialen Abstand (S), der als eine Entfernung von einer radial inneren Stirnseite (74) des Fußes (68) zu einer Vorderkante der Plattform (64) definiert ist, mit 0 % Abstand an der radial inneren Stirnseite (74) des Fußes (68) und 100 % Abstand an der Vorderkante der Plattform (64) aufweist und sich die Einlassöffnung (76) in einem Abstand von 50 % oder mehr befindet.

6. Schaufel für ein Gasturbinentriebwerk nach Anspruch 5, wobei sich die Einlassöffnung (76) in einem Abstand von 60 % bis 90 % befindet.

7. Schaufel für ein Gasturbinentriebwerk nach einem der vorangehenden Ansprüche, wobei sich der Kühldurchgang (78) zu einer oder mehreren Auslassöffnungen (86) in der Plattform (64) erstreckt.

8. Schaufel für ein Gasturbinentriebwerk nach Anspruch 7, wobei sich die Auslassöffnungen (86) auf der Gaswegseite (64a) der Plattform (64), hinter der Hinterkante (66b) des Schaufelprofils (66) öffnen.

9. Schaufel für ein Gasturbinentriebwerk nach einem der vorangehenden Ansprüche, wobei der Kühldurchgang (78) einen Serpentinenabschnitt (78e) innerhalb der Plattform (64) beinhaltet.

10. Schaufel für ein Gasturbinentriebwerk Anspruch 9, wobei der Serpentinenabschnitt (78e) um mindestens 180° gewunden ist.

11. Gasturbinentriebwerk (20), umfassend:
einen Verdichterabschnitt (24);
eine Brennkammer (56) in Fluidkommunikation mit dem Verdichterabschnitt (24);und
einen Turbinenabschnitt (28) in Fluidkommunikation mit der Brennkammer (56), wobei der Turbinenabschnitt (28) gekoppelt ist, um den Verdichterabschnitt (24) anzutreiben, der Turbinenabschnitt (28) eine Schaufel für ein Gasturbinentriebwerk (60) nach einem der vorangehenden Ansprüche aufweist.

12. Verfahren zum Kühlen einer Schaufel für ein Gasturbinentriebwerk, das Verfahren umfassend:
Kühlen einer Schaufel (60), die Folgendes beinhaltet:
eine Plattform (64), die eine Gaswegseite (64a) und eine Nicht-Gaswegseite (64b) aufweist;
ein Schaufelprofil (66), das sich radial von der Gaswegseite (64a) der Plattform (64) erstreckt, wobei das Schaufelprofil (66) eine Vorderkante (66a) und eine Hinterkante (66b) definiert;
einen Fuß (68), der dazu konfiguriert ist, die Schaufel (60) zu sichern, wobei sich der Fuß (68) radial von der Nicht-Gaswegseite (64b) der Plattform (64) erstreckt, der Fuß (68) vordere und hintere axiale Stirnseiten (70, 72) und eine Einlassöffnung (76) in der vorderen axialen Stirnseite (70) definiert; und
einen Kühldurchgang (78), der sich von der Einlassöffnung (76) durch den Fuß (68) und in die Plattform (64) erstreckt, und
einen Kühldurchgang (78), der sich in dem Fuß (68) von der Einlassöffnung (76) erstreckt,
wobei die Kühlung der Schaufel (60) das Zuführen von Kühlluft (80) zu der vorderen axialen Stirnseite (70) durch die Einlassöffnung (76) und in den Kühldurchgang (78) beinhaltet;
**gekennzeichnet dadurch, dass** die Schaufel ferner Folgendes umfasst:
eine Vielzahl von Schaufelprofilkühldurchgängen (82), die sich radial durch den Fuß (68) und die Plattform (64) und in das Schaufelprofil (66) erstrecken, und wobei der Kühldurchgang (78) in Umfangsrichtung zwischen mindestsens zwei der Schaufelprofilkühldurchgänge (82) verläuft, wobei sich der Kühldurchgang (78) ausschließlich in der Plattform (64) und dem Fuß (68) erstreckt und die Schaufelprofilkühldurchgänge (82) innerhalb der Schaufel (60) von dem Kühldurchgang (78) isoliert sind.

## Revendications

1. Aube de moteur à turbine à gaz (60) comprenant :
une plate-forme (64) ayant un côté de trajet de gaz (64a) et un côté de non-trajet de gaz (64b) ;
un profil aérodynamique (66) s'étendant radialement depuis le côté de trajet de gaz (64a) de la plate-forme (64), le profil aérodynamique (66) définissant une extrémité avant (66a) et une extrémité arrière (66b) ;
une emplanture (68) configurée pour fixer l'aube (60), l'emplanture (68) s'étendant radialement depuis le côté de non-trajet de gaz (64b) de la plate-forme (64), l'emplanture (68) définissant des faces axiales avant et arrière (70, 72), et un orifice d'entrée (76) dans la face axiale avant (70) ; et
un passage de refroidissement (78) s'étendant depuis l'orifice d'entrée (76), à travers l'emplanture (68) et dans la plate-forme (64) ;
**caractérisée par**
comprenant en outre une pluralité de passages de refroidissement de profil aérodynamique (82) qui s'étendent radialement à travers l'emplanture (68) et la plate-forme (64) et dans le profil aérodynamique (66), le passage de refroidissement (78) passant circonférentiellement entre au moins deux des passages de refroidissement de profil aérodynamique (82) ;
dans laquelle le passage de refroidissement (78) s'étend exclusivement dans la plate-forme (64) et l'emplanture (68), et les passages de refroidissement de profil aérodynamique (82) sont isolés à l'intérieur de l'aube (60) depuis le passage de refroidissement (78).

2. Aube de moteur à turbine à gaz selon la revendication 1, dans laquelle l'orifice d'entrée (76) est à niveau avec la face axiale avant (70).

3. Aube de moteur à turbine à gaz selon la revendication 1 ou 2, dans laquelle l'orifice d'entrée (76) est centré circonférentiellement sur la face axiale avant (70).

4. Aube de moteur à turbine à gaz selon une quelconque revendication précédente, dans laquelle le profil aérodynamique (66) définit un extrados (66c) et un intrados (66d), et la plate-forme (64) a un premier côté circonférentiel (64e) sur l'extrados (66c) et un second côté circonférentiel (64f) sur l'intrados (66d), et dans la plate-forme (64) le passage de refroidissement (78) est plus proche du premier côté (64e) que du second côté (64f).

5. Aube de moteur à turbine à gaz selon une quelconque revendication précédente, dans laquelle l'emplanture (68) a une étendue radiale (S) définie comme une distance depuis une face radialement intérieure (74) de l'emplanture (68) vers un bord d'attaque de la plate-forme (64), avec 0 % d'envergure au niveau de la face radialement intérieure (74) de l'emplanture (68) et 100 % d'envergure au niveau du bord d'attaque de la plate-forme (64), et l'orifice d'entrée (76) est situé à 50 % d'envergure ou plus.

6. Aube de moteur à turbine à gaz selon la revendication 5, dans laquelle l'orifice d'entrée (76) est situé à une envergure de 60 % jusqu'à une envergure de 90 %.

7. Aube de moteur à turbine à gaz selon une quelconque revendication précédente, dans laquelle le passage de refroidissement (78) s'étend vers un ou plusieurs orifices de sortie (86) dans la plate-forme (64).

8. Aube de moteur à turbine à gaz selon la revendication 7, dans laquelle les orifices de sortie (86) s'ouvrent sur le côté de trajet de gaz (64a) de la plate-forme (64), à l'arrière de l'extrémité arrière (66b) du profil aérodynamique (66).

9. Aube de moteur à turbine à gaz selon une quelconque revendication précédente, dans laquelle le passage de refroidissement (78) comporte une section en serpentin (78e) à l'intérieur de la plate-forme (64).

10. Aube de moteur à turbine à gaz selon la revendication 9, dans laquelle la section en serpentin (78e) tourne d'au moins 180°.

11. Moteur à turbine à gaz (20) comprenant :
une section de compresseur (24) ;
une chambre de combustion (56) en communication fluidique avec la section de compresseur (24) ; et
une section de turbine (28) en communication fluidique avec la chambre de combustion (56), la section de turbine (28) étant couplée pour entraîner la section de compresseur (24), la section de turbine (28) ayant une aube de moteur à turbine à gaz (60) selon une quelconque revendication précédente.

12. Procédé de refroidissement d'une aube de moteur de turbine à gaz, le procédé comprenant :
le refroidissement d'une aube (60) qui comporte une plate-forme (64) ayant un côté de trajet de gaz (64a) et un côté de non-trajet de gaz (64b) ;
un profil aérodynamique (66) s'étendant radialement depuis le côté de trajet de gaz (64a) de la plate-forme (64), le profil aérodynamique (66) définissant une extrémité avant (66a) et une extrémité arrière (66b) ;
une emplanture (68) configurée pour fixer l'aube (60), l'emplanture (68) s'étendant radialement depuis le côté de non-trajet de gaz (64b) de la plate-forme (64), l'emplanture (68) définissant des faces axiales avant et arrière (70, 72), et un orifice d'entrée (76) dans la face axiale avant (70) ; et
un passage de refroidissement (78) s'étendant depuis l'orifice d'entrée (76), à travers l'emplanture (68) et dans la plate-forme (64), et
un passage de refroidissement (78) s'étendant dans l'emplanture (68) depuis l'orifice d'entrée (76),
dans lequel le refroidissement de l'aube (60) comporte l'alimentation en air de refroidissement (80) vers la face axiale avant (70), à travers l'orifice d'entrée (76) et dans le passage de refroidissement (78) ;
**caractérisé par** l'aube comprenant en outre :
une pluralité de passages de refroidissement de profil aérodynamique (82) qui s'étendent radialement à travers l'emplanture (68) et la plate-forme (64) et dans le profil aérodynamique (66), le passage de refroidissement (78) passant circonférentiellement entre au moins deux des passages de refroidissement de profil aérodynamique (82), dans lequel le passage de refroidissement (78) s'étend exclusivement dans la plate-forme (64) et l'emplanture (68), et les passages de refroidissement de profil aérodynamique (82) sont isolés à l'intérieur de l'aube (60) depuis le passage de refroidissement (78) .
